(19) Europäisches Patentamt
European Patent Office
Office européen des brevets

(11) EP 4 685 175 A1

(12) EUROPEAN PATENT APPLICATION
published in accordance with Art. 153(4) EPC

(43) Date of publication:
**28.01.2026 Bulletin 2026/05**

(21) Application number: **24774487.3**

(22) Date of filing: **08.02.2024**

(51) International Patent Classification (IPC):
***C08J 5/04*** *(2006.01)* ***C08K 3/105*** *(2018.01)*
***C08L 71/00*** *(2006.01)* ***D06M 15/37*** *(2006.01)*

(52) Cooperative Patent Classification (CPC):
**C08J 5/04; C08K 3/105; C08L 71/00; D06M 15/37**

(86) International application number:
**PCT/JP2024/004255**

(87) International publication number:
**WO 2024/195341 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.03.2023 JP 2023046268**

(71) Applicant: **Toray Industries, Inc.**
**Tokyo 103-8666 (JP)**

(72) Inventors:
- **ISHITAKE, Kenji**
  **Nagoya-shi, Aichi 455-8502 (JP)**
- **KOSHI, Masayuki**
  **Nagoya-shi, Aichi 455-8502 (JP)**
- **YOSHINO, Koki**
  **Nagoya-shi, Aichi 455-8502 (JP)**
- **FUJITA, Yuzo**
  **Nagoya-shi, Aichi 455-8502 (JP)**

(74) Representative: **Hoefer & Partner Patentanwälte mbB**
**Pilgersheimer Straße 20**
**81543 München (DE)**

# (54) FIBER-REINFORCED THERMOPLASTIC RESIN BASE MATERIAL

(57) To provide a fiber reinforced thermoplastic resin intermediate material that is excellent in thermal stability, a fiber reinforced thermoplastic resin intermediate material including a plurality of continuous reinforcing fibers impregnated with a polyaryletherketone resin is provided, in which the total content of an alkali metal and an alkaline earth metal contained in the fiber reinforced thermoplastic resin intermediate material is 5ppm or more and less than 50ppm.

EP 4 685 175 A1

## Description

TECHNICAL FIELD

The present invention relates to a fiber reinforced resin intermediate material. Specifically, the present invention relates to a fiber reinforced thermoplastic resin intermediate material including a polyaryletherketone resin.

BACKGROUND ART

Fiber reinforced resin intermediate materials that have a plurality of continuous reinforcing fibers impregnated with a thermoplastic resin not only have excellent lightweight effects, but also have better toughness, welding processability, and recyclability than fiber reinforced resin intermediate materials in which a thermosetting resin is used, and thus, are widely used in a variety of applications, for example, transportation equipment such as aircrafts and automobiles, and sports, electric, and electronic components. In recent years, high added values, such as high heat resistance, low water adsorption, high toughness, and molding processability have been required besides mechanical strength and weight reduction effects, which have conventionally been added values, for CFRTP (carbon fiber-reinforced thermoplastic resin) intermediate materials, and the technical development of high-function CFRTP intermediate materials has been strongly required, mainly in the applications of aircrafts, UAM(Urban Air Mobility), and automobiles.

Polyaryletherketone (hereinafter, sometimes abbreviated as PAEK) resins are crystalline thermoplastic resins that have excellent heat resistance and chemical resistance, and have been attracting attention particularly as matrix resins of composite materials. The fiber-reinforced PAEK resin intermediate materials, however, need to be processed at high temperatures of 300°C or higher in producing molded articles, and have the problem of varying in thickening and thermal characteristics due to impurities in the fiber-reinforced PAEK resin intermediate materials, and composite materials that are excellent in heat resistance and molding processability have been further required.

Patent Document 1 discloses a method for producing a fiber-reinforced PAEK resin intermediate material with excellent impregnability, in which an alkali metal salt or an alkaline earth metal salt is mixed in an amount of 0.005 wt% (50 ppm) or more based on the PAEK resin.

Patent Document 2 discloses a highly crystalline fiber-reinforced polyetherketoneketone resin intermediate material in which the total content of aluminum, phosphorus, and sodium is 100 ppm or less.

Patent Document 3 discloses a method for producing a fiber-reinforced PAEK resin intermediate material that is excellent in thermal stability, with the use of a thermally stable surfactant containing sodium.

Patent Document 4 discloses a fiber-reinforced thermoplastic resin material with excellent processability, containing an alkali metal salt or an alkaline earth metal salt in an amount of 0.2 to 3.2 wt%.

PRIOR ART DOCUMENTS

PATENT DOCUMENTS

Patent Document 1: Japanese Patent Laid-open Publication No. S59-207929
Patent Document 2: WO 2020/213406
Patent Document 3: National Publication of International Patent Application No. 2020-513052
Patent Document 4: Japanese Patent Laid-open Publication No. 2022-91563

SUMMARY OF THE INVENTION

PROBLEMS TO BE SOLVED BY THE INVENTION

The method proposed in Patent Document 1 provides a fiber-reinforced PAEK resin intermediate material with excellent impregnability, but in which the content of alkali metal and alkaline earth metal mixed is 50ppm or more, and the material changes in the molecular weight and degree of melt crystallization at the time of heating, and has a problem with process stability at the time of molded article production.

Patent Document 2 mentions the total content of aluminum, phosphorus, and sodium is 100 ppm or less, thereby providing the fiber-reinforced polyetherketoneketone resin material with high crystallinity. However, Patent Document 2 fails to specifically disclose the content of the alkaline earth metal salt, and the stability against temperature at the time of molding has been required. In addition, because the resin is produced by using a reprecipitation purification method with sulfuric acid, there were challenges in process stability during molded article manufacturing, safety, handleability, and

economic efficiency.

Patent Document 3 discloses a method for producing a fiber-reinforced PAEK resin intermediate material that is excellent in thermal stability, with the use of a thermally stable surfactant containing sodium, and specifically mentions an intermediate material with the change in weight average molecular weight being 20% or less at the time of heating at 375°C for 20 minutes under a nitrogen atmosphere. However, a fiber-reinforced PAEK resin intermediate material with further excellent thermal stability has been desired, and Patent Document 3 fails to specifically disclose the contents of alkali metal and alkaline earth metal in the fiber-reinforced PAEK resin intermediate material.

Patent Document 4 discloses a fiber-reinforced thermoplastic resin material with excellent processability, containing an alkali metal salt or an alkaline earth metal salt in an amount of 0.2 to 3.2 wt%. However, Patent Document 4 fails to specifically disclose any fiber-reinforced PAEK resin intermediate material with excellent thermal stability, or the contents of alkali metal and alkaline earth metal in the fiber-reinforced PAEK resin intermediate material.

As described above, the thermal stability of the fiber-reinforced PAEK resin intermediate materials is not sufficient with the conventional techniques. The present invention provides a fiber-reinforced PAEK resin intermediate material that is excellent in thermal stability and excellent in process stability at the time of component manufacture and molding cyclability.

SOLUTIONS TO THE PROBLEMS

The present invention for solving the problems mentioned above has any one of the following configurations.

[1] A fiber reinforced thermoplastic resin intermediate material including a plurality of continuous reinforcing fibers impregnated with a polyaryletherketone resin, in which the total content of an alkali metal and an alkaline earth metal contained in the fiber reinforced thermoplastic resin intermediate material is 5ppm or more and less than 50ppm.

[2] The fiber reinforced thermoplastic resin intermediate material according to [1], in which the alkali metal in the fiber reinforced thermoplastic resin intermediate material is sodium or potassium.

[3] The fiber reinforced thermoplastic resin intermediate material according to [1] or [2], in which the alkaline earth metal in the fiber reinforced thermoplastic resin intermediate material is calcium or magnesium.

[4] The fiber reinforced thermoplastic resin intermediate material according to any one of [1] to [3], in which the melt crystallization temperature change $\Delta Tc$ measured after treating the fiber reinforced thermoplastic resin intermediate material under the following conditions is 0°C or more and 2°C or less.

Treatment conditions: 380°C $\times$ 30min under a nitrogen atmosphere

[5] The fiber reinforced thermoplastic resin intermediate material according to any one of [1] to [4], in which the polyaryletherketone resin has a weight number average molecular weight change rate $\Delta Mw$ of 25% or less in treating the fiber reinforced thermoplastic resin intermediate material under the following conditions.

Treatment conditions: 380°C $\times$ 30min under a nitrogen atmosphere

[6] The fiber reinforced thermoplastic resin intermediate material according to any one of [1] to [5], in which the polyaryletherketone resin in the fiber reinforced thermoplastic resin intermediate material is a polyaryletherketone resin selected from the group consisting of a polyetherketone, a polyetheretherketone, a polyetherketoneketone, a polyetheretherketoneketone, a polyetherketoneetherketoneketone, a polyetheretherketoneetherketone, a polyetheretheretherketone, and a polyetherdiphenyletherketone, and mixtures thereof, copolymers there, and copolymers thereof with other polyaryletherketone resins.

EFFECTS OF THE INVENTION

According to the present invention, the total content of the alkali metal and the alkaline earth metal contained in the fiber reinforced thermoplastic resin intermediate material with the PAEK resin used as a matrix resin is controlled to fall within a specific range, thereby allowing the thermal stability to be enhanced for the PAEK resin intermediate material required to be treated at high temperature. Thus, the present invention can provide a fiber-reinforced PAEK resin intermediate material (prepreg) that is excellent in process stability at the time of component manufacture and molding cyclability.

EMBODIMENTS OF THE INVENTION

Embodiments of the present invention will be described below in detail.

<Reinforcing Fibers>

The type of the reinforcing fibers is not particularly limited, and examples thereof include carbon fibers, metal

fibers, organic fibers, and inorganic fibers. Two or more types of these fibers may be used. Using carbon fibers for the reinforcing fibers enables obtaining a fiber reinforced resin intermediate material that has high mechanical properties while being lightweight.

Examples of the carbon fibers include PAN-based carbon fibers made from polyacrylonitrile (PAN) fibers as a raw material, pitch-based carbon fibers made from a petroleum tar or a petroleum pitch as a raw material, cellulose-based carbon fibers made from a viscose rayon, a cellulose acetate, or the like as a raw material, vaporgrown carbon fibers made from a hydrocarbon or the like as a raw material, and graphitized fibers of these fibers. Among these carbon fibers, PAN-based carbon fibers are preferably used, because of their excellent balance between strength and elastic modulus.

Examples of the metal fibers include fibers made from metals such as iron, gold, silver, copper, aluminum, brass, and stainless steel.

Examples of the organic fibers include fibers made from organic materials such as an aramid, a polybenzoxazole (PBO), a polyphenylene sulfide, a polyester, a polyamide, and a polyethylene. Examples of the aramid fibers include: para-aramid fibers that are excellent in strength and elastic modulus; and meta-aramid fibers that are excellent in flame resistance and long-term heat resistance. Examples of the para-aramid fibers include: polyparaphenylene terephthalamide fibers, and copolyparaphenylene-3,4'-oxydiphenylene terephthalamide fibers, and examples of the meta-aramid fibers include polymetaphenylene isophthalamide fibers. As the aramid fibers, para-aramid fibers that are higher in elastic modulus than meta-aramid fibers are preferably used.

Examples of the inorganic fibers include fibers made from inorganic materials such as glass, basalt, silicon carbide, and silicon nitride. Examples of the glass fibers include E-glass fibers (for electric usages), C-glass fibers (for anti-corrosion usages), S-glass fibers, and T-glass fibers (high in strength and elastic modulus). The basalt fibers are fibers with very high heat resistance, obtained by forming basalt, which is a mineral, into fibers. Basalt generally contains from 9 to 25% by weight of FeO or $FeO_2$, which is a compound of iron, and from 1 to 6% by weight of TiO or $TiO_2$, which is a compound of titanium, and it is also possible to increase the amounts of these components in a molten state, and then form the basalt into fibers.

The fiber reinforced thermoplastic resin intermediate material in the present invention is a prepreg, and is often expected to serve as a reinforcing material. Thus, the material desirably exhibits high mechanical properties, and preferably includes carbon fibers as the reinforcing fibers to exhibit high mechanical properties.

In the fiber reinforced thermoplastic resin intermediate material in the present invention, the reinforcing fibers are typically used in the form of reinforcing fiber bundles consisting of multiple single fibers in one or more rows. The total number of filaments (the number of single fibers) of the reinforcing fibers in the case of arranging the reinforcing fiber bundles in one or more rows is preferably from 1,000 to 2,000,000. From the viewpoint of productivity, the total number of filaments of the reinforcing fibers is more preferably from 1,000 to 1,000,000, still more preferably from 1,000 to 600,000, and particularly preferably from 1,000 to 300,000. The upper limit of the total number of filaments of the reinforcing fibers may be determined in consideration of balance such that the productivity, dispersibility and handleability can be kept good.

One reinforcing fiber bundle according to the present invention, which is preferably 5 to 10 $\mu$m in average diameter, is formed by bundling 1,000 to 50,000 single fibers of reinforcing fibers. The reinforcing fiber bundle is impregnated with a composition of a polyaryletherketone resin described later as a matrix resin.

The continuous reinforcing fiber in the present invention refers to a reinforcing fiber that is not discontinuous in the longitudinal direction of the fiber in the fiber reinforced thermoplastic resin intermediate material. Examples of the form and arrangement of the reinforcing fibers in an embodiment of the present invention include fibers aligned in one direction, woven fabrics (cloths), knitted fabrics, braids, and tows. In particular, the reinforcing fibers are preferably oriented in one direction, because the mechanical properties in a specific direction can be enhanced efficiently.

<Polyaryletherketone Resin>

As described above, the reinforcing fibers are impregnated with a polyaryletherketone resin (PAEK resin). The polyaryletherketone resin for use in the present invention is not particularly limited as long as the resin is a thermoplastic resin having a repeat unit that has an aryl group bonded with an ether group and a ketone group, and is preferably a polymer having units of the following general formula (Ia) and general formula (Ib).

[Chemical Formula 1]

$$-\!\left[ Ar^1 - X \right]\!- \quad \cdots (\mathrm{I\,a})$$

$$-\!\left[ Ar^2 - Y \right]\!- \quad \cdots (\mathrm{I\,b})$$

$Ar^1$ and $Ar^2$ herein each represent an arylene group. $Ar^1$ and $Ar^2$ may be the same as or different from each other. $Ar^1$ and $Ar^2$ are each independently preferably one or more arylene groups selected from the group consisting of 1,3-phenylene, 1,4-phenylene, 4,4'-biphenylene, 1,4-bis(4-phenoxybenzoyl) phenylene, 1,4-naphthylene, 1,5-naphthylene, 2,6-naphthylene, and anthracenylene. X represents an electron-withdrawing group. X is preferably one or more groups selected from the group consisting of a carbonyl group and a sulfonyl group. Y is one or more groups selected from the group consisting of an oxygen atom, a sulfur atom, and an alkylene group. Y is preferably one or more groups selected from the group consisting of $-CH_2-$, isopropylidene, and hexafluoroisopropylidene.

For these structural units, preferably, at least 50 mol% of X, more preferably, at least 70 mol% of X corresponds to a carbonyl group. Furthermore, preferably, at least 50 mol% of Y, more preferably, at least 70 mol% of Y corresponds to oxygen atoms.

Examples of the polyaryletherketone include a polyetheretherketone having a structural unit of the following formula (II) and/or a structural unit of the following formula (III), a polyetherketone having a structural unit of the following formula (IV), a polyetherketoneketone having a structural unit of the following formula (V) and/or a structural unit of the following formula (VI), a polyetheretherketoneketone having a structural unit of the following formula (VII), and a polyetherketoneetherketoneketone having a structural unit of the following formula (VIII). These can be used alone, or two or more thereof can be used in combination.

[Chemical Formula 2]

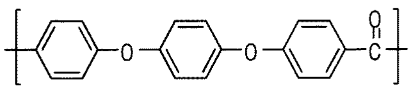 ···(II)

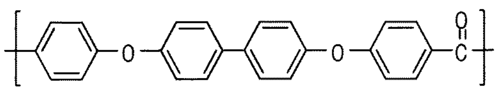 ···(III)

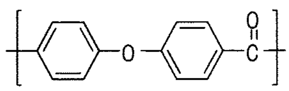 ···(IV)

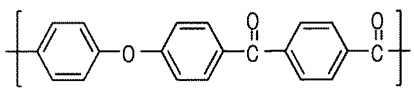 ···(V)

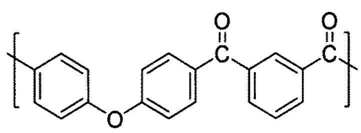 ···(VI)

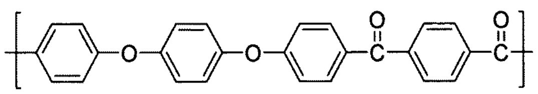 ···(VII)

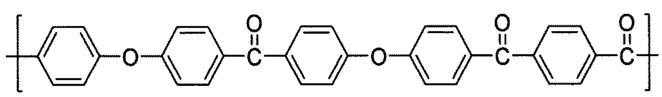 ···(VIII)

The polyaryletherketone resin for use in the present invention is not particularly limited, and is selected from the

group consisting of a polyetherketone (PEK), a polyetheretherketone (PEEK), a polyetherketoneketone (PEKK), a polyetheretherketoneketone (PEEKK), a polyetherketoneetherketoneketone (PEKEKK), a polyetheretherketoneetherketone (PEEKEK), a polyetheretheretherketone (PEEEK), a polyetherdiphenyletherketone (PEDEK), and mixtures thereof, copolymers thereof the resins, and copolymers thereof with other PAEK resins. For example, polyaryletherketones put on the market can also be obtained and then used, such as "VESTAKEEP (registered trademark)" manufactured by Polyplastics-Evonik Corporation, "VICTREX (registered trademark)" manufactured by Victrex Japan Inc., "KEPSTAN (registered trademark)" manufactured by Arkema S.A., and "AvaSpire (registered trademark)", "KetaSpire (registered trademark)", and "NovaSpire (registered trademark)" manufactured by Solvay Specialty Polymers Japan K.K. Among the groups mentioned above, the resins other than PEKK are preferred from the viewpoint of molding processability.

<Fiber Reinforced Thermoplastic Resin Intermediate Material>

The fiber reinforced thermoplastic resin intermediate material according to the present invention is a fiber reinforced PAEK resin intermediate material in which continuous reinforcing fibers are impregnated with a polyaryletherketone resin, which is a thermoplastic prepreg including a PAEK resin as a matrix resin.

In the present invention, the total metal content of an alkali metal and an alkaline earth metal contained in the fiber reinforced thermoplastic resin intermediate material is 5ppm or more and less than 50ppm. When the total metal content is 50ppm or more, the thermal stability of the fiber reinforced thermoplastic resin intermediate material is deteriorated, thereby deteriorating the process stability at the time of component production and molding cyclability. On the other hand, when the total metal content is less than 5ppm, the adhesion between the PAEK resin and the reinforcing fibers is decreased, thus limiting the environment and condition for use as a fiber reinforced thermoplastic resin intermediate material. Further, in order to enhance the adhesion, the number of steps of washing the PAEK resin to be used is increased, thereby resulting in an increase in price, and thus, the enhancement of the adhesion has a tendency to be uneconomical.

The upper limit of the metal content is preferably 48ppm or less, more preferably 40ppm or less. When the upper limit of the total metal content falls within the preferred range mentioned above, a fiber reinforced thermoplastic resin intermediate material with improved thermal stability tends to be obtained. The lower limit of the metal content is preferably 10ppm or more. The lower limit of 10ppm or more allows the number of steps of washing the PAEK resin to be reduced, and allows inexpensive PAEK resins to be used, which has a tendency be economically advantageous.

The total metal content of the fiber reinforced thermoplastic resin intermediate material herein is a value (mass ppm) obtained by thermally decomposing the material with a sulfuric acid, a nitric acid, a hydrofluoric acid, and a perchloric acid, then dissolving the thermally decomposed material in a dilute nitric acid, and for this solution, calculating the contents of the alkali metal and alkaline earth metal in the obtained solution with high frequency induction plasma (ICP) or the like. For example, a solution obtained by thermal decomposition with a sulfuric acid, a nitric acid, a hydrofluoric acid, and a perchloric acid and then dissolution with a dilute nitric acid is analyzed by ICP atomic emission spectroscopy or atomic absorption spectrometry, thereby allowing quantification. In particular, the ICP atomic emission spectroscopy is capable of analyzing multiple elements at the same time with high sensitivity, and thus is a widely used method for quantification of trace elements.

Further, the alkali metal refers to lithium, sodium, potassium, rubidium, cesium, and francium. The alkaline earth metal refers to magnesium, calcium, strontium, barium, and radium.

In the present invention, the alkali metal contained in the fiber reinforced thermoplastic resin intermediate material is preferably sodium or potassium. When the alkali metal is sodium or potassium, the electrical characteristics and thermal characteristics of the fiber reinforced thermoplastic resin intermediate material tend to be excellent.

In addition, the alkaline earth metal contained in the fiber reinforced thermoplastic resin intermediate material is preferably magnesium or calcium. When the alkali earth metal is magnesium or calcium, the electrical characteristics and thermal characteristics of the fiber reinforced thermoplastic resin intermediate material tend to be excellent.

The fiber reinforced thermoplastic resin intermediate material preferably contains no (that is, not more than the detection limit) metals other than sodium, potassium, magnesium, and calcium. By limiting metals contained in the intermediate material to only the metals mentioned above, residence stability, electrical characteristics, and thermal characteristics of the PAEK resin can be further improved.

The fiber reinforced thermoplastic resin intermediate material according to the present invention preferably has a melt crystallization temperature change ($\Delta$Tc) of 0°C or more and 2°C or less, more preferably 0°C or more and 1°C or less. When the melt crystallization temperature change falls within the range mentioned above, the fiber reinforced thermoplastic resin intermediate material has a tendency to be more excellent in mechanical properties, heat weldability, and molding cyclability. More specifically, when the melt crystallization temperature change is 2°C or less, the thermal stability of the fiber reinforced thermoplastic resin intermediate material is further enhanced, the welding characteristics and the molding cyclability can be improved, and the residence stability of the PAEK resin in the fiber reinforced thermoplastic resin intermediate material can be enhanced.

Unless otherwise specified, the melt crystallization temperature change ($\Delta$Tc) in the present invention can be

calculated from the following formula (a) with the values of: the melt crystallization temperature Tc (1) of the fiber reinforced thermoplastic resin intermediate material without heat treatment; and the melt crystallization temperature Tc (2) of the fiber reinforced thermoplastic resin intermediate material heated at 380°C for 30 minutes under a nitrogen atmosphere, measured by using a differential scanning calorimeter (Q 2500 manufactured by TA Instruments).

$$\Delta Tc = Tc\ (1) - Tc\ (2) \cdots (a)$$

Tc(1): the melt crystallization temperature of the fiber reinforced thermoplastic resin intermediate material without heat treatment

Tc(2): the melt crystallization temperature of the fiber reinforced thermoplastic resin intermediate material heated at 380°C for 30 minutes under the nitrogen atmosphere

The melt crystallization temperature change (ΔTc) is allowed to fall within the range mentioned above by adjusting the total metal content of the alkali metal and the alkaline earth metal contained in the fiber reinforced thermoplastic resin intermediate material to be 5ppm or more and less than 50ppm as follows, or by changing the end or main chain structure of the PAEK resin.

In order to cause the total metal content to fall within the range mentioned above to cause the melt crystallization temperature change to fall within the range according to the present invention, it is more preferable to use water that is low in electrical conductivity in a powder method in a method described later for producing the fiber reinforced thermoplastic resin intermediate material. In addition, it is preferable to use a surfactant containing no metal.

In the fiber reinforced thermoplastic resin intermediate material according to the present invention, the weight average molecular weight change rate (ΔMw) of the PAEK resin treated under a nitrogen atmosphere at 380°C for 30 minutes is preferably 25% or less, more preferably 20% or less. When the weight average molecular weight change rate falls within the range mentioned above, the fiber reinforced thermoplastic resin intermediate material has a tendency to be more excellent in mechanical properties, heat weldability, and molding cyclability. More specifically, when the weight average molecular weight change rate is 25% or less, the thermal stability of the fiber reinforced thermoplastic resin intermediate material is further enhanced, the welding characteristics and the molding cyclability can be improved, and the residence stability of the PAEK resin in the fiber reinforced thermoplastic resin intermediate material can be enhanced.

Unless otherwise specified, the weight average molecular weight change rate (ΔMw) of the PAEK resin is calculated from the following formula (b) with the values of: the weight average molecular weight Mw (1) of the PAEK resin in the fiber reinforced thermoplastic resin intermediate material without heat treatment; and the weight average molecular weight Mw (2) of the PAEK resin in the fiber reinforced thermoplastic resin intermediate material heated at 380°C for 30 minutes under a nitrogen atmosphere, measured by using gel permeation chromatography described later.

$$\Delta Mw\ [\%] = \{Mw\ (2) - Mw\ (1)\}/Mw\ (1) \times 100 \cdots\cdot (b)$$

Mw(1): the weight average molecular weight of the PAEK resin in the fiber reinforced thermoplastic resin intermediate material without heat treatment

Mw(2): the weight average molecular weight of the PAEK resin in the fiber reinforced thermoplastic resin intermediate material heated at 380°C for 30 minutes under the nitrogen atmosphere

The weight average molecular weight can be determined by gel permeation chromatography with the use of an eluent in which a resin component to be used is dissolved. For example, with the use of, as an eluent, a mixed liquid of chlorophenol and halogenated benzene such as chlorobenzene, chlorotoluene, bromobenzene, bromotoluene, dichlorobenzene, dichlorotoluene, dibromobenzene, and dibromotoluene, or a mixed liquid of pentafluorophenol and chloroform, calculation is performed in terms of polystyrene by using gel permeation chromatography (PL-220 (manufactured by Polymer Laboratories), HLC-8320GPC (manufactured by Tosoh Corporation), or the like).

In the fiber reinforced thermoplastic resin intermediate material according to the present invention, the weight loss percentage ΔW at the time of heating the material is preferably 0.08% or less, more preferably 0.05% or less. The weight loss percentage is a value represented by the following formula (c), which is a value determined from a sample weight (W1) at the time of reaching 100°C and a sample weight (W2) at the time of reaching 380°C, when a thermogravimetric analysis is performed while a sample is heated at a rate of temperature increase: 10°C/min from 50°C to an arbitrary temperature of 380°C or higher under atmospheric pressure.

$$\Delta W = (W1 - W2)/W1 \times 100\ (\%) \cdots (c)$$

When the weight loss percentage ΔW exceeds 0.08%, for example, a problem such as a large amount of gas

generated at the time of molding the fiber reinforced thermoplastic resin intermediate material tends to be more likely to be caused, which is not preferred. In addition, when the weight loss percentage ΔW exceeds 0.08%, the amounts of substances adhering to a mold at the time of molding also tend to be increased, thereby deteriorating the productivity, which is not preferred. The lower limit of the weight loss percentage ΔW of the fiber reinforced thermoplastic resin intermediate material is not particularly limited, and typically has a tendency to fall within the range of 0.01% or more, while the characteristics tend to be better as the lower limit is lower.

The fiber reinforced thermoplastic resin intermediate material according to the present invention is preferably 0.1 to 1.5 mm in thickness. When the thickness is 0.1 mm or more, the strength of a molded article obtained with the use of the fiber reinforced thermoplastic resin intermediate material can be improved. The thickness is more preferably 0.2 mm or more. On the other hand, when the thickness is 1.5 mm or less, the reinforcing fibers are more easily impregnated with the polyaryletherketone resin. The thickness is more preferably 1 mm or less, still more preferably 0.7 mm or less, even more preferably 0.6 mm or less.

In addition, the fiber reinforced thermoplastic resin intermediate material according to the present invention preferably contains 20% by volume or more and 65% by volume or less of reinforcing fibers, based on the volume of the whole fiber reinforced thermoplastic resin intermediate material as 100% by volume. The fiber reinforced thermoplastic resin intermediate material contains 20% by volume or more of reinforcing fibers, thereby allowing the strength of a molded article obtained with the use of the fiber reinforced thermoplastic resin intermediate material to be further improved. The volume content is more preferably 30% by volume or more, still more preferably 40% by volume or more. On the other hand, when the fiber reinforced thermoplastic resin intermediate material contains 65% by volume or less of reinforcing fibers, thereby making the reinforcing fibers more easily impregnated with the thermoplastic resin. The volume content of the reinforcing fibers is more preferably 60% by volume or less, still more preferably 55% by volume or less. Further, the volume content can be adjusted to fall within a desired range by adjusting the amounts of the reinforcing fibers and PAEK resin to be added.

The volume content (Vf) of reinforcing fibers in the fiber reinforced thermoplastic resin intermediate material is calculated from the following formula (d) by measuring the mass WO of the fiber reinforced thermoplastic resin intermediate material, then decomposing and eluting the PAEK resin of the fiber reinforced thermoplastic resin intermediate material in accordance with the sulfuric acid decomposition method described in JIS K7075-1991, and measuring the mass W1 of remaining reinforcing fibers after washing and drying.

$$Vf\ (\%\ \text{by volume}) = (W1/\rho f)/\{W1/\rho f + (W0-W1)/\rho r\} \times 100 \quad \cdots (d)$$

ρf: density (g/cm$^3$) of reinforcing fiber
ρr: density of polyaryletherketone resin (g/cm$^3$)

<Method for Producing Fiber Reinforced Thermoplastic Resin Intermediate Material>

The fiber reinforced thermoplastic resin intermediate material according to the present invention may be obtained by impregnating continuous reinforcing fibers with a polyaryletherketone resin composition.

Examples of the method for impregnating the continuous reinforcing fibers with the polyaryletherketone resin include: a film method in which a film-shaped polyaryletherketone resin is melted and pressed to impregnate a reinforcing fiber bundle with the polyaryletherketone resin; a commingle method in which after blended spinning of a fibrous polyaryletherketone resin with a reinforcing fiber bundle, the fibrous polyaryletherketone resin is melted and pressed to impregnate the reinforcing fiber bundle with the thermoplastic resin; a powder method in which after dispersing a powdered polyaryletherketone resin in gaps between fibers in a reinforcing fiber bundle, the powdered polyaryletherketone resin is melted and pressed to impregnate the reinforcing fiber bundle with the polyaryletherketone resin; and a drawing method in which a reinforcing fiber bundle is immersed in a molten polyaryletherketone resin and pressed to impregnate the reinforcing fiber bundle with the polyaryletherketone resin. The powder method and the drawing method are preferred because the methods are capable of preparing various types of fiber reinforced thermoplastic resin intermediate materials that vary in thicknesses and fiber volume content, and the powder method is more preferred.

Among powder methods, a powder method in which a reinforcing fiber bundle is allowed to pass through a suspension in which a powdered polyaryletherketone resin is dispersed in water with the use of a surfactant, the powdered polyaryletherketone resin adhering to the reinforcing fiber bundle is melted and pressed to impregnate the reinforcing fiber bundle with the polyaryletherketone resin is still more preferred.

The PAEK resin powder for use in the powder method preferably has a resin powder pulverized, in order for the suspension to achieve optimum homogeneity and good impregnability for the reinforcing fibers. The PAEK powder is

preferably 1 to 100 μm, more preferably 5 to 50 μm, still more preferably 10 to 35 μm in volume average particle size of primary particle sizes. When the volume average particle size falls within the range mentioned above, the impregnability for the reinforcing fibers has a tendency to be high. Further, the volume average particle size is calculated from a particle size distribution measured by using a laser diffraction/scattering method in accordance with the standard of ISO 13320:2020.

As the water for use in the suspension for use in the powder method, pure water, ion exchanged water, or ultrapure water is preferably used, more preferably ion exchanged water or ultrapure water, still more preferably ultrapure water. The electrical conductivities of pure water, ion exchanged water, and ultrapure water are respectively 1 to 10 μS/cm, 0.1 to 1 μS/cm, and 0.055 to 0.1 μS/cm.

The surfactant for use in the suspension for use in the powder method is preferably a metal-free surfactant, more preferably a nonionic surfactant or an amphoteric surfactant.

<Method for Producing Molded Article/Composite>

The fiber reinforced thermoplastic resin intermediate material according to the present invention is laminated in an arbitrary configuration, and then molded by applying heat and/or pressure. Examples of the method of applying heat and/ pressure include: a press molding method in which a fiber reinforced thermoplastic resin intermediate material laminated in an arbitrary configuration is placed in a mold or on press plates, and then pressed with the mold or press plates closed; an autoclave molding method in which a fiber reinforced thermoplastic resin intermediate material laminated in an arbitrary configuration is placed in an autoclave, and pressed and heated therein; a bagging molding method in which a fiber reinforced thermoplastic resin intermediate material laminated in an arbitrary configuration is wrapped with a film or the like, and heated in an oven while pressing at atmospheric pressure with the interior under reduced pressure; and a wrapping tape method in which a tape is wound around a fiber reinforced thermoplastic resin intermediate material laminated in an arbitrary configuration, while applying a tension, and heated in an oven. Above all, a molding method of pressing with the use of a mold is preferred, because a molded article that has an excellent appearance quality with fewer voids can be obtained.

As the press molding method, hot pressing or stamping molding can be used. In the hot pressing, the fiber reinforced thermoplastic resin intermediate material is placed in a mold in advance, pressed and heated while tightening the mold, and then cooled by cooling the mold with the mold tightened, thereby providing a molded article. In the stamping molding, the fiber reinforced thermoplastic resin intermediate material is heated in advance to a temperature that is equal to or higher than the melting temperature of the thermoplastic resin, with a heating device, such as a far infrared heater, a hot plate, a high temperature oven or dielectric heating, and with the thermoplastic resin molten and softened, placed on a mold as a lower surface that forms a mold for molding, and then after closing and tightening the mold, and pressed and cooled. Among the methods, the stamping molding is desired from the viewpoint of accelerating the molding cycle to enhance the productivity.

The fiber reinforced thermoplastic resin intermediate material according to the present invention can be subjected to: integral molding such as insert molding and outsert molding; reforming by heating; an adhesive method that is excellent in productivity, such as heat welding, vibration welding, and ultrasonic welding, or integration with the use of an adhesive, thereby providing a composite.

The composite is preferably a composite molded article in which the fiber reinforced thermoplastic resin intermediate material according to the present invention, and a molded article including a thermoplastic resin are at least partially joined.

The molded article (molding material and molded article thereof) including a thermoplastic resin, to be integrated with the fiber reinforced thermoplastic resin intermediate material according to the present invention, is not particularly limited, and examples thereof include resin materials and molded articles thereof, metal materials and molded articles thereof, and inorganic materials and molded articles thereof. Among these molded articles, resin materials and molded articles thereof are preferred from the viewpoint of the strength of adhesion to the fiber reinforced thermoplastic resin intermediate material according to the present invention.

The matrix resin of the molding material and molded article thereof, to be integrated with the fiber reinforced thermoplastic resin intermediate material according to the present invention, may be the same type of resin as the fiber reinforced thermoplastic resin intermediate material according to the present invention and the molded article thereof, or may be a different type of resin. In order to further enhance the adhesion strength, the same type of resin is preferred. In the case of a different type of resin, it is more suitable to provide a resin layer at the interface.

## EXAMPLES

Hereinafter, the present invention will be described more specifically with reference to examples, but the present invention is not limited thereto.

In the examples and comparative examples, the following materials were used as PAEK resins, additives, and reinforcing fibers.

[PAEK resin: Reference Example 1]

A PAEK-1 resin was synthesized in accordance with the method described in Japanese Patent No. 6339184.
More specifically, diphenyl sulfone (125.52 kg) was put into a 300 liter tank equipped with a lid, a stirrer/stirring seal, nitrogen inlet and an outlet, and heated to 150°C. When the diphenyl sulfone was completely melted, 4,4'-difluorobenzophenone (44.82 kg, 205.4 mol), 1,4-dihydroxybenzene (16.518 kg, 150 mol), and 4,4'-dihydroxydiphenyl (9.311 kg, 50 mol) were put in the tank. The contents were then heated to 160°C. While keeping a nitrogen atmosphere, dried sodium carbonate (21.368 kg, 201.6 mol) and potassium carbonate (1.106 kg, 8 mol) (both of which passed through a sieve of 500 micrometers in opening size) were added. The temperature was raised to 180°C at 1°C/min and held for 100 minutes. The temperature was raised to 200°C at 1°C/min and held for 20 minutes. The temperature was raised to 305°C at 1°C/min and held until reaching the desired melt viscosity (determined by torque increase of the stirrer). The reaction mixture was poured into a band casting machine, then allowed to cool in a water bath, subjected to grinding, and washed with acetone and water. The obtained polymer powder was dried in a tumble dryer until the measured temperature of the contents reached 112°C. The dried polymer powder was pulverized with a jet mill to obtain particles of 23 μm in volume average particle size. The particles were defined as the PAEK-1 resin.

[Reinforcing Fiber: Reference Example 2]

CF-1: Carbon fiber bundles (product name: T700S-12K, manufactured by Toray Industries, Inc.) were treated at 350°C for 30 minutes in the air to burn off the sizing agent, and used.

[Water]

The following was used for the deionized water for use in the powder method.

Water-1: Electrical Conductivity 0.079 μm/Scm
Water-2: Electrical Conductivity 2.01 μm/Scm
Water-3: Electrical Conductivity 3.00 μm/Scm
Water-4: Electrical Conductivity 9.5 μm/Scm.

[Surfactant]

The following was used for the deionized water for use in the powder method.

Surfactant-1: metal-free surfactant "AMPHITOL" (registered trademark) 20 N (amine oxide manufactured by Kao Corporation)
Surfactant-2: metal-containing surfactant PELEX TR (sodium dialkyl sulfosuccinate manufactured by Kao Corporation).

[Quantification of Contents of Alkali Metal and Alkaline Earth Metal]

The fiber reinforced thermoplastic resin intermediate material, the PAEK resin, and the total content of the alkali metal and the alkaline earth metal were quantified by the following method. In quartz, 5 g of a sample was weighed, decomposed by heating with a sulfuric acid, a nitric acid, a hydrofluoric acid, and a perchloric acid, and then diluted to 50 mL by dissolution with a dilute nitric acid. For this solution, various elements were quantitatively analyzed by ICP atomic emission spectroscopy (apparatus; Optima 4300 DV manufactured by PerkinElmer, Inc.) to determine the contents of lithium, sodium, potassium, rubidium, cesium, francium, magnesium, calcium, strontium, barium, and radium.

[Melt Crystallization Temperature]

The melt crystallization temperature (Tc) of the fiber reinforced thermoplastic resin intermediate material was measured with the use of the following measurement conditions under a nitrogen atmosphere with the use of Q2500 manufactured by TA Instruments. The value of the exothermic peak of the First Run was used for the melt crystallization temperature (Tc) of the fiber reinforced thermoplastic resin intermediate material.

First Run

- · Holding at 30°C for 5 minutes
- · Raising the temperature from 30°C to 380°C at a rate of temperature increase: 10°C/min
- · Holding at 380°C for 5 minutes
- · Decreasing the temperature from 380°C to 30°C at a rate of temperature decrease: 10°C/min.

[Melt Crystallization Temperature Change (ΔTc)]

The melt crystallization temperature change (ΔTc) was calculated from the following formula (a) with melt crystallization temperatures measured by differential scanning calorimetry: for the fiber reinforced thermoplastic resin intermediate material without heat treatment; and for the fiber reinforced thermoplastic resin intermediate material heated at 380°C for 30 minutes under a nitrogen atmosphere.

$$\Delta Tc = Tc\ (1) - Tc\ (2) \cdots\ (a)$$

Tc(1): the melt crystallization temperature of the fiber reinforced thermoplastic resin intermediate material without heat treatment

Tc(2): the melt crystallization temperature of the fiber reinforced thermoplastic resin intermediate material heated at 380°C for 30 minutes under the nitrogen atmosphere.

[Weight Average Molecular Weight of PAEK Resin]

4mL of the following measurement solvent was added to 8 mg of the sample, and the mixture was gently stirred at 170 to 180°C for 20 minutes. Thereafter, filtration was performed with the use of a 0.45 μm filter. The weight average molecular weight (Mw) of the PAEK resin was calculated in terms of polystyrene by using gel permeation chromatography (GPC). The conditions for the measurement by GPC are shown below.

Apparatus: PL-220 manufactured by Polymer Laboratories)
Detector: differential refractive index detector RI
Column: Shodex HT-806M (two columns) (8.0 mm × 30 cm, manufactured by Showa Denko K.K.)
Measurement Solvent: 1,2,4-trichlorobenzene/4-chlorophenol
Flow Rate: 0.7 mL/min
Column Temperature: 115°C
Injection Amount: 0.200 mL.

[Weight Average Molecular Weight Change Rate (ΔMw) of PAEK Resin]

The weight average molecular weight change rate (ΔMw) of the PAEK resin was calculated from the following formula (b) with the weight average molecular weight of the PAEK resin measured by using gel permeation chromatography: for the fiber reinforced thermoplastic resin intermediate material without heat treatment; and the fiber reinforced thermoplastic resin intermediate material heated at 380°C for 30 minutes under a nitrogen atmosphere.

$$\Delta Mw\ [\%] = \{Mw\ (2) - Mw\ (1)\}/Mw\ (1) \times 100 \cdots\ (b)$$

Mw(1): the weight average molecular weight of the PAEK resin in the fiber reinforced thermoplastic resin intermediate material without heat treatment

Mw(2): the weight average molecular weight of the PAEK resin in the fiber reinforced thermoplastic resin intermediate material heated at 380°C for 30 minutes under the nitrogen atmosphere

[Measurement of Fiber Volume Content (Vf)]

The fiber volume content (Vf) in the fiber reinforced thermoplastic resin intermediate material was calculated from the following formula (d) by measuring the mass WO of the fiber reinforced thermoplastic resin intermediate material, then decomposing and eluting the PAEK resin of the fiber reinforced thermoplastic resin intermediate material in accordance

with the sulfuric acid decomposition method described in JIS K7075-1991, and measuring the mass W1 of remaining reinforcing fibers after washing and drying.

$$Vf\ (\%\ by\ volume) = (W1/\rho f)/\{W1/\rho f + (W0-W1)/\rho r\} \times 100 \quad \cdots (d)$$

$\rho f$: density (g/cm$^3$) of reinforcing fiber
$\rho r$: density of PAEK resin (g/cm$^3$).

[Examples 1 to 3, Comparative Examples 1 to 3]

Strands (16 strands) with continuous carbon fibers (CF-1) aligned were impregnated with the PAEK-1 resin by a powder method to obtain a fiber reinforced thermoplastic resin intermediate material. Specifically, carbon fibers were first coated with the PAEK-1 resin by pulling the strands in an aqueous slurry of the PAEK-1 resin. The aqueous slurry was formulated with 16,000 ml of water and 11.3 g of a surfactant per 11000 g of the PAEK-1 resin which was ground and pulverized with a jet mill. Further, in each of the examples and comparative examples, the water and the surfactant were varied such that the metal content in the obtained fiber reinforced thermoplastic resin intermediate material was as shown in Table 1. Then, the strands were pulled through a die heated to 380°C to melt or soften the PAEK-1 resin and then completely impregnate the strands with the resin, thereby providing a fiber reinforced thermoplastic resin intermediate material in which reinforcing fibers were arranged in one direction.

The obtained fiber reinforced thermoplastic resin intermediate material was subjected to the evaluations described above. The evaluation results are shown in Table 1. As for the contents of alkali metal and alkaline earth metal, Table 1 has only sodium, potassium, magnesium, and calcium listed, because of lithium, rubidium, cesium, francium, strontium, barium, and radium below the detection limit.

[Table 1]

| | PAEK resin | Reinforcing fiber | Water | surfactant | ΔTc (°C) | Na (ppm) | K (ppm) | Ca (ppm) | Mg (ppm) | Total metal content (ppm) | ΔMw (%) |
|---|---|---|---|---|---|---|---|---|---|---|---|
| Example 1 | PAEK-1 | CF-1 | Water-1 | Surfactant-1 | 0.4 | 13 | 3 | 13 | 6 | 35 | 10.3 |
| Example 2 | PAEK-1 | CF-1 | Water-2 | Surfactant-1 | 0.1 | 17 | 2 | 6 | 8 | 33 | 8.6 |
| Example 3 | PAEK-1 | CF-1 | Water-3 | Surfactant-1 | 1.5 | 20 | 5 | 18 | 1 | 48 | 13.8 |
| Comparative Example 1 | PAEK-1 | CF-1 | Water-4 | Surfactant-1 | 2.2 | 23 | 4 | 21 | 10 | 58 | 25.9 |
| Comparative Example 2 | PAEK-1 | CF-1 | Water-2 | Surfactant-2 | 5 | 45 | 7 | 30 | 11 | 93 | 29.3 |
| Comparative Example 3 | PAEK-1 | CF-1 | Water-4 | Surfactant-2 | 10 | 100 | 10 | 10 | 12 | 132 | 31.0 |
| Reference Example 1 | PAEK-1 | | | | 6 | 30 | 3 | 10 | 1 | 44 | 26.9 |
| Reference Example 2 | | CF-1 | | | | Less than 0.01 | Less than 0.01 | Less than 0.01 | Less than 0.01 | Less than 0.01 | |

The results of Examples 1 to 3 and Comparative Examples 1 to 3 will be described in comparison.

As shown in Table 1, the fiber reinforced thermoplastic resin intermediate materials according to Examples 1 to 3 in which the total content of the alkali metal and the alkaline earth metal is 5ppm or more and less than 50ppm each have a small melt crystallization temperature change ΔTc of 2°C or less, and have a ΔMw of 25% or less, which indicate that the materials are excellent in thermal stability.

In contrast, as shown in Table 1, in the fiber reinforced thermoplastic resin intermediate material according to Comparative Example 1 obtained with the use of the water-4 with the high electrical conductivity, the increased total content of alkali metal and alkaline earth metal resulted in ΔTc and ΔMw increased. Also in the fiber reinforced thermoplastic resin intermediate materials according to Comparative Examples 2 to 3 obtained with the use of the metal-containing surfactant-2, the increased total content of the alkali metal and the alkaline earth metal resulted in ΔTc and ΔMw further increased.

INDUSTRIAL APPLICABILITY

The fiber reinforced thermoplastic resin intermediate material according to the present invention and the molded article thereof can be used for various applications such as aircraft parts, automobile parts, electrical and electronic parts, building members, various containers, daily necessities, household goods, and sanitary goods, taking advantage of their good properties. In particular, the fiber reinforced thermoplastic resin intermediate material according to the embodiment of the present invention, or a molded article thereof, is particularly preferably used in applications in which impregnability, heat aging resistance and surface appearance are required. Examples of such applications include peripheral parts of aircraft engines, exterior parts of aircraft parts, automotive body parts and vehicle skeletons, peripheral parts of automotive engines, automotive under-hood parts, automotive gear parts, automotive interior parts, automotive exterior parts, parts for air intake and exhaust systems, parts for engine cooling water systems, automotive electrical components, and electric and electronic components. Specific examples of applications in which the fiber-reinforced resin according to the embodiment of the present invention or a molded article thereof is preferably used, include: peripheral parts of aircraft engines, such as fan blades; aircraft related parts such as landing gear pods, winglets, spoilers, edges, ladders, elevators, fairing and ribs; automotive body parts such as various sheets, front bodies, under bodies, various pillars, various members, various frames, various beams, various supports, various rails and various hinges; peripheral parts of automotive engines, such as engine covers, air intake pipes, timing belt covers, intake manifolds, filler caps, throttle bodies and cooling fans; automotive under-hood parts such as cooling fans, tops and bases of radiator tanks, cylinder head covers, oil pans, tubes for brake piping and fuel piping, and parts for waste gas systems; automotive gear parts such as gears, actuators, bearing retainers, bearing cages, chain guides and chain tensioners; automotive interior parts such as shift lever brackets, steering lock brackets, key cylinders, inner door handles, door handle cowls, in-vehicle mirror brackets, air conditioner switches, instrumental panels, console boxes, glove boxes, steering wheels and trims; automotive exterior parts such as front fenders, rear fenders, fuel lids, door panels, cylinder head covers, door mirror stays, tailgate panels, license garnishes, roof rails, engine mount brackets, rear garnishes, rear spoilers, trunk lids, rocker moldings, moldings, lamp housings, front grills, mud guards and side bumpers; parts for air intake and exhaust systems, such as air intake manifolds, intercooler inlets, turbochargers, exhaust pipe covers, inner bushes, bearing retainers, engine mounts, engine head covers, resonators and throttle bodies; parts for engine cooling water systems, such as chain covers, thermostat housings, outlet pipes, radiator tanks, alternators and delivery pipes; automotive electrical components such as connectors and wire harness connectors, motor parts, lamp sockets, sensorequipped switches and combination switches; and electric and electronic components including: electric components such as power generators, electric motors, transformers, current transformers, voltage regulators, rectifiers, resistors, inverters, relays, power contacts, switches, breakers, switches, knife switches, multipole rods, motor casings, television housings, notebook personal computer housings and internal components, CRT display housings and internal components, printer housings and internal components, housings and internal components of mobile terminals such as mobile phones, mobile personal computers and handheld mobiles, IC and LED-compatible housings, condenser back plates, fuse holders, various gears, various casings and cabinets; and electronic components such as connectors, SMT-compatible connectors, card connectors, jacks, coils, coil bobbins, sensors, LED lamps, sockets, resistors, relays, relay casings, reflectors, small switches, power supply parts, coil bobbins, condensers, variable capacitor casings, optical pickup chasses, vibrators, various terminal boards, transformers, plugs, printed circuit boards, tuners, speakers, microphones, headphones, small motors, magnetic head bases, power modules, Si power modules and SiC power modules, semiconductors, liquid crystals, FDD carriages, FDD chasses, motor brush holders, transformer members, parabola antennas and computer-related components.

## Claims

1. A fiber reinforced thermoplastic resin intermediate material comprising a plurality of continuous reinforcing fibers impregnated with a polyaryletherketone resin, wherein a total content of an alkali metal and an alkaline earth metal contained in the fiber reinforced thermoplastic resin intermediate material is 5ppm or more and less than 50ppm.

2. The fiber reinforced thermoplastic resin intermediate material according to claim 1, wherein the alkali metal in the fiber reinforced thermoplastic resin intermediate material is sodium or potassium.

3. The fiber reinforced thermoplastic resin intermediate material according to claim 1 or 2, wherein the alkaline earth metal in the fiber reinforced thermoplastic resin intermediate material is calcium or magnesium.

4. The fiber reinforced thermoplastic resin intermediate material according to claim 1 or 2, wherein a melt crystallization temperature change $\Delta Tc$ measured after treating the fiber reinforced thermoplastic resin intermediate material under the following conditions is 0°C or more and 2°C or less.
Treatment conditions: 380°C $\times$ 30min under a nitrogen atmosphere

5. The fiber reinforced thermoplastic resin intermediate material according to claim 1 or 2, wherein the polyaryletherketone resin has a weight number average molecular weight change rate $\Delta Mw$ of 25% or less in treating the fiber reinforced thermoplastic resin intermediate material under the following conditions.
Treatment conditions: 380°C $\times$ 30min under a nitrogen atmosphere

6. The fiber reinforced thermoplastic resin intermediate material according to claim 1 or 2, wherein the polyaryletherketone resin in the fiber reinforced thermoplastic resin intermediate material is a polyaryletherketone resin selected from the group consisting of a polyetherketone, a polyetheretherketone, a polyetherketoneketone, a polyetheretherketoneketone, a polyetherketoneetherketoneketone, a polyetheretherketoneetherketone, a polyetheretheretherketone, and a polyetherdiphenyletherketone, and mixtures thereof, copolymers thereof, and copolymers thereof with other polyaryletherketone resins.

## INTERNATIONAL SEARCH REPORT

International application No.
**PCT/JP2024/004255**

**A. CLASSIFICATION OF SUBJECT MATTER**

***C08J 5/04***(2006.01)i; ***C08K 3/105***(2018.01)i; ***C08L 71/00***(2006.01)i; ***D06M 15/37***(2006.01)i
FI: C08J5/04 CEZ; C08K3/105; C08L71/00; D06M15/37

According to International Patent Classification (IPC) or to both national classification and IPC

**B. FIELDS SEARCHED**

Minimum documentation searched (classification system followed by classification symbols)

C08J5/04-5/10; C08J5/24; C08K3/00-13/08; C08L1/00-101/14; D06M13/00-15/715

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | WO 2020/213406 A1 (TEIJIN LIMITED) 22 October 2020 (2020-10-22)<br>claim 5, paragraphs [0032], [0041], [0059], [0073], table 2 | 1-6<br><br>1-6 |
| Y | JP 2020-513052 A (ARKEMA FRANCE) 30 April 2020 (2020-04-30)<br>claim 1, paragraphs [0017], [0097], [0150], examples | 1-6 |
| Y | JP 59-207929 A (IMPERIAL CHEMICAL INDUSTRIES, PLC) 26 November 1984 (1984-11-26)<br>claim 1, p. 5, upper right column, line 7 to lower left column, line 8 | 1-6 |
| Y | WO 2023/008365 A1 (POLYPLASTICS CO., LTD.) 02 February 2023 (2023-02-02)<br>paragraph [0016] | 1-6 |
| A | JP 6339184 B2 (VICTREX MANUFACTURING LIMITED) 06 June 2018 (2018-06-06)<br>examples | 1-6 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 March 2024** | **16 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (July 2022)

**INTERNATIONAL SEARCH REPORT**
**Information on patent family members**

International application No.
**PCT/JP2024/004255**

| Patent document cited in search report | Publication date (day/month/year) | Patent family member(s) | Publication date (day/month/year) |
|---|---|---|---|
| WO 2020/213406 A1 | 22 October 2020 | US 2022/0195134 A1<br>claim 5, paragraphs [0037], [0047], [0064], [0085], table 2<br>EP 3957687 A1<br>TW 202104397 A | |
| JP 2020-513052 A | 30 April 2020 | US 2021/0130557 A1<br>claim 1, paragraphs [0016], [0096], [0157]-[0162], examples<br>WO 2018/185440 A1<br>EP 3606984 A1<br>CN 110475809 A<br>KR 10-2019-0128081 A | |
| JP 59-207929 A | 26 November 1984 | US 4638037 A<br>claim 1, column 3, line 60 to column 4, line 8<br>EP 125816 A2 | |
| WO 2023/008365 A1 | 02 February 2023 | TW 202313844 A | |
| JP 6339184 B2 | 06 June 2018 | US 2016/0152769 A1<br>examples<br>WO 2014/207458 A1<br>EP 3013888 A1<br>KR 10-2016-0024998 A<br>CN 105555835 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S59207929 A
- WO 2020213406 A
- JP 2020513052 A
- JP 2022091563 A
- JP 6339184 B